# EUROPÄISCHE PATENTSCHRIFT

(11) **EP 4 405 216 B1**
(45) Veröffentlichungstag und Bekanntmachung des Hinweises auf die Patenterteilung: **10.09.2025**
(21) Anmeldenummer: 22772796.3
(22) Anmeldetag: 15.08.2022
(51) Int. Cl.: B60T 7/02, B60T 7/04, B60T 7/08, B60T 8/171, B60T 13/66, B60T 13/68, B60T 13/74, B60T 17/22

(54) **VERFAHREN ZUM BETREIBEN EINES BREMSSYSTEMS EINES NUTZFAHRZEUGES**
METHOD FOR OPERATING A BRAKE SYSTEM OF A UTILITY VEHICLE
PROCÉDÉ PERMETTANT DE FAIRE FONCTIONNER UN SYSTÈME DE FREIN D'UN VÉHICULE UTILITAIRE

(30) Priorität: 24.09.2021 DE 102021210697
(43) Veröffentlichungstag der Anmeldung: 31.07.2024
(73) Patentinhaber: ZF Friedrichshafen AG, 88046 Friedrichshafen (DE); ZF CV Systems Europe BV, 1170 Brussels (BE)
(72) Erfinder: SAGMEISTER, Martin, 94036 Passau (DE); HAVERKAMP, Michael, 30453 Hannover (DE)
(74) Vertreter: ZF Friedrichshafen AG
(86) Internationale Anmeldenummer: PCT/EP2022/072748
(87) Internationale Veröffentlichungsnummer: WO 2023/046368

(56) Entgegenhaltungen:
- DE-A1- 102012 020 421
- DE-A1- 102018 110 781
- DE-A1- 102019 211 537
- DE-A1- 102019 219 407
- DE-A1- 102020 102 590
- DE-A1- 102020 103 660
- DE-A1- 102020 200 494
- DE-A1- 102020 200 495

## Beschreibung

Die Erfindung betrifft ein Verfahren zum Betreiben eines Bremssystems eines Nutzfahrzeuges, insbesondere eines landwirtschaftlichen oder kommunalen Nutzfahrzeuges, wobei das Bremssystem eine Betriebsbremsanlage, eine Hilfsbremsanlage und Bremseinrichtungen für Fahrzeugräder des Nutzfahrzeuges aufweist, wobei bei der Betriebsbremsanlage in einem Normalbetrieb bei Betätigung mindestens einer Bremsbetätigungseinrichtung zumindest ein zugeordneter Betriebsbremsaktuator angesteuert wird, über welchen mit Ansteuerung eine der Betätigung der mindestens einen Bremsbetätigungseinrichtung entsprechende Betätigung der jeweils zugehörigen Bremseinrichtung vorgenommen wird, wobei bei der Hilfsbremsanlage über mindestens ein Steuergerät eine Betätigung von mindestens einer der Bremseinrichtungen einleitbar ist, und wobei bei Erfassung eines zumindest teilweisen Ausfalls der Betriebsbremsanlage ein Notbetrieb durchgeführt wird. Des Weiteren betrifft die Erfindung ein Steuergerät, ein Bremssystem eines Nutzfahrzeuges sowie ein Nutzfahrzeug.

Bremssysteme von Kraftfahrzeugen weisen üblicherweise eine Betriebsbremsanlage auf, um während der Fahrt des jeweiligen Kraftfahrzeuges durch entsprechende Betätigung einer oder mehrerer zugehöriger Bremsbetätigungseinrichtungen ein Abbremsen von Fahrzeugrädern und damit auch des Kraftfahrzeuges vornehmen zu können. Außerdem ist in einem Bremssystem üblicherweise eine Hilfsbremsanlage vorzusehen, über die das jeweilige Kraftfahrzeug im stillstehenden Zustand, beispielsweise im geparkten Zustand, durch Festbremsen zumindest einzelne Fahrzeugräder in der jeweils aktuellen Position gehalten werden kann. Ein Bremssystem ist dabei bei einem Kraftfahrzeug als redundantes System zu realisieren, um selbst bei einem Ausfall eines Teils des Bremssystems möglichst dennoch ein Abbremsen des Kraftfahrzeuges zu ermöglichen. Teilweise wird dabei gezielt die Hilfsbremsanlage bei einem zumindest teilweisen Ausfall der Betriebsbremsanlage hinzugezogen, um das Abbremsen des Kraftfahrzeuges vornehmen zu können.

Aus der US 2005/0168064 A1 geht ein Bremssystem für ein Nutzfahrzeug hervor, bei welchem es sich um ein Zugfahrzeug handelt, wie beispielsweise einen Sattelschlepper. Das Bremssystem umfasst dabei eine Betriebsbremsanlage und eine Hilfsbremsanlage, über welche unabhängig voneinander ein Abbremsen von Fahrzeugrädern des Nutzfahrzeuges über Bremseinrichtungen vorgenommen werden kann. Das Bremssystem der US 2005/0168064 A1 ist dabei insgesamt als elektronisches Bremssystem realisiert, bei welchem zum einen eine Betätigung einer Bremsbetätigungseinrichtung der Betriebsbremsanlage in Form eines Bremspedals sowie zum anderen eine Betätigung einer Feststellbremsbetätigungseinrichtung einer Feststellbremsanlage in Form eines Handbremshebels jeweils über Steuergeräte erfasst und in einem Datenbussystem in entsprechende Ansteuerungen von Bremsaktuatoren umgesetzt wird. Dabei sind Bremsaktuatoren einer Vorderachse des Nutzfahrzeuges und Bremsaktuatoren einer Hinterachse des Nutzfahrzeuges in separaten Kreisen eingebunden.

Im Falle eines teilweisen Ausfalls der Betriebsbremsanlage in Form eines Ausfalls des Bremskreises der Vorderachse wird im Rahmen eines Notbetriebs dann anderweitig ein Abbremsen der Fahrzeugräder der Vorderachse hervorgerufen. Dabei wird bei einer Variante eine Betätigung der Feststellbremsbetätigungseinrichtung bei der Hilfsbremsanlage im Zuge des Notbetriebs in ein Bremsen der Fahrzeugräder der Vorderachse über die Bremsaktuatoren umgesetzt, wozu ein Steuergerät ein Ventil ansteuert und hierdurch die Bremsaktuatoren der Vorderachse aus einem zum Bremskreis der Vorderachse unabhängigen Kreis für einen Anhänger des Nutzfahrzeuges mit Fluid versorgt werden.

DE 10 2019 219 407 A1 betrifft ein Bremssystem für ein Kraftfahrzeug. Insbesondere handelt es sich hierbei um ein integriertes Bremssystem. Ein integriertes Bremssystem ist eine Baueinheit, die eine Vielzahl von Funktionen in einem kompakten Aufbau kombiniert. Insbesondere umfasst ein solches integriertes Bremssystem einen Hauptzylinder, der mit Hilfe eines Bremspedals betätigt werden kann, eine zusätzliche Druckquelle, insbesondere eine Plunger-Anordnung, die elektromechanisch aktuierbar ausgebildet ist, einen Bremskreislauf, der die hydraulischen Komponenten miteinander verbindet, Steuerventile, die zur Ansteuerung der Bremsen verwendet werden, ein Steuergerät zum Ansteuern der Steuerventile und/ oder ein Fluidreservoir, das einen Vorrat an Fluid bereitstellt. Das integrierte Bremssystem umfasst zumindest einige, vorzugsweise alle der vorgenannten Komponenten. Die Steuerventile und das Steuergerät stellen in Zusammenarbeit mit der Druckquelle eine Ansteuerung der Bremsen und vorzugsweise entsprechende Fahr- und Bremsassistenzfunktionen bereit. Diese Fahr- und Bremsassistenzfunktionen werden unter anderen für autonomes oder teilautonomes Fahren sowie auch bei starken Bremsvorgängen genutzt.

DE 10 2019 211 537 A1 betrifft ein hydraulisches Bremssystem für ein Kraftfahrzeug, mit mindestens zwei Bremskreisen, die jeweils wenigstens eine hydraulisch betätigbare Radbremse und jeweils zumindest einen elektrisch betreibbaren Druckerzeuger aufweisen, wobei die Druckerzeuger in Abhaengigkeit von einer Bremsanforderung des Kraftfahrzeugs oder eines Fahrers des Kraftfahrzeugs ansteuerbar sind.

Ausgehend vom vorstehend beschriebenen Stand der Technik ist es nun die Aufgabe der vorliegenden Erfindung, ein Bremssystem für ein Nutzfahrzeug zu schaffen, mittels welchem bei einem zumindest teilweisen Ausfall einer Betriebsbremsanlage dennoch ein zuverlässiges Abbremsen des Nutzfahrzeuges vorgenommen werden kann, wobei gleichzeitig ein einfacher Aufbau dieses Bremssystems ermöglicht ist.

Aus verfahrenstechnischer Sicht erfolgt eine Lösung dieser Aufgabe ausgehend vom Oberbegriff des Anspruchs 1 in Verbindung mit dessen kennzeichnenden Merkmalen. Aus vorrichtungstechnischer Sicht wird die Aufgabe durch die technischen Merkmale des Anspruchs 7 gelöst, welcher ein betrifft. Die hierauf jeweils folgenden, abhängigen Ansprüche geben jeweils vorteilhafte Weiterbildungen der Erfindung wieder. Zudem betreffen die Ansprüche 8 bis 11 ein Bremssystem für ein Nutzfahrzeug, bei welchem ein vorgenanntes Steuergerät vorgesehen ist. Schließlich hat noch Anspruch 12 ein Nutzfahrzeug mit einem vorgenannten Bremssystem zum Gegenstand.

Gemäß dem nebengeordneten Anspruch 1 wird bei einem Verfahren zum Betreiben eines Bremssystems, welches eine Betriebsbremsanlage, eine Hilfsbremsanlage und Bremseinrichtungen für Fahrzeugräder des Nutzfahrzeuges aufweist, bei der Betriebsbremsanlage in einem Normalbetrieb bei Betätigung mindestens einer Bremsbetätigungseinrichtung zumindest ein zugeordneter Betriebsbremsaktuator angesteuert, über welchen mit Ansteuerung eine der Betätigung der mindestens einen Bremsbetätigungseinrichtung entsprechende Betätigung der jeweils zugehörigen Bremseinrichtung vorgenommen wird. Ferner kann bei der Hilfsbremsanlage über mindestens ein Steuergerät eine Betätigung von mindestens einer der Bremseinrichtungen eingeleitet werden. Bei Erfassung eines zumindest teilweisen Ausfalls der Betriebsbremsanlage wird zudem ein Notbetrieb durchgeführt.

Das erfindungsgemäße Verfahren kommt bei einem Bremssystem eines Nutzfahrzeuges zur Anwendung, bei welchem es sich insbesondere um ein landwirtschaftliches oder kommunales Nutzfahrzeug handelt. Besonders bevorzugt ist das Nutzfahrzeug dabei ein Ackerschlepper. Das Nutzfahrzeug verfügt bevorzugt über mehrere Achsen in Form einer Vorderachse und einer Hinterachse, von denen zumindest eine Achse mit bremsbaren Fahrzeugrädern ausgestattet ist. Besonders bevorzugt können aber alle Fahrzeugräder des Fahrzeuges gebremst werden, wozu jedem Fahrzeugrad je eine Bremseinrichtung zugeordnet ist. Bei einer Bremseinrichtung für ein Fahrzeugrad handelt es sich im Sinne der Erfindung insbesondere um eine Scheibenbremse, wobei diese als nasse Mehrscheibenbremse konzipiert sein kann.

Jede Bremseinrichtung ist im Rahmen der Erfindung bevorzugt einem Betriebsbremsaktuator zugeordnet, über welchen bei Ansteuerung eine Betätigung der zugehörigen Bremseinrichtung vorgenommen wird. Dabei wird diese Betätigung in einem Normalbetrieb des Bremssystems dann vorgenommen, wenn an mindestens einer Bremsbetätigungseinrichtung der Betriebsbremsanlage eine Betätigung stattfindet, wobei hierbei eine Intensität einer Betätigung der jeweiligen Bremseinrichtung über den zugehörigen Betriebsbremsaktuator in Abhängigkeit einer Intensität der Betätigung der mindestens einen Bremsbetätigungseinrichtung stattfindet. Die mindestens eine Bremsbetätigungseinrichtung liegt im Sinne der Erfindung insbesondere als Bremspedal vor, welches über einen Fahrzeugführer des Nutzfahrzeuges zum Abbremsen des Nutzfahrzeuges über die Betriebsbremsanlage betätigt werden kann.

Dabei kann bei dem Bremssystem im Rahmen der Erfindung genau eine Bremsbetätigungseinrichtung vorhanden sein, bei deren Betätigung im Normalbetrieb des Bremssystems sämtliche Betriebsbremsaktuatoren der Betriebsbremsanlage angesteuert und dementsprechend über die zugehörigen Bremseinrichtungen auch ein Abbremsen der Fahrzeugräder vorgenommen wird. Besonders bevorzugt sind aber zwei Bremsbetätigungseinrichtungen vorgesehen, um über die Betriebsbremsanlage die Funktion einer Lenkbremse abbilden zu können. So wird durch Betätigen der einen Bremsbetätigungseinrichtung lediglich eine Ansteuerung von dem oder den Betriebsbremsaktuatoren vorgenommen, die die in Längsrichtung des Nutzfahrzeuges auf einer Seite des Nutzfahrzeuges liegenden Bremseinrichtungen betätigen, während ein Betätigen der jeweils anderen Bremsbetätigungseinrichtung eine Betätigung der auf der anderen Seite des Nutzfahrzeuges liegenden Bremseinrichtungen durch Ansteuerung von dem oder den hier liegenden Betriebsbremsaktuatoren zur Folge hat.

Die Hilfsbremsanlage ist bei dem Bremssystem dafür vorgesehen, bei dem zumindest teilweisen Ausfall der Betriebsbremsanlage ein Abbremsen des Fahrzeugs entsprechend der Vorgaben eines Fahrzeugführers vorzunehmen. Erfindungsgemäß ist die Hilfsbremsanlage zudem dazu ausgestaltet, im Normalbetrieb des Bremssystems auf eine entsprechende Vorgabe des Fahrzeugführers hin eine Parkbremsfunktion des Nutzfahrzeuges zu verwirklichen, um das Nutzfahrzeug durch Festbremsen von Fahrzeugrädern in einer aktuellen Position zu halten. Vorliegend wird bei dem erfindungsgemäßen Verfahren zum Betreiben des Bremssystems dabei diese Parkbremsfunktion dadurch realisiert, dass über das mindestens ein Steuergerät eine Betätigung von mindestens einer der Bremseinrichtungen der Fahrzeugräder eingeleitet wird. Besonders bevorzugt nimmt das mindestens eine Steuergerät diese Einleitung der Betätigung im Rahmen der Parkbremsfunktion dann vor, wenn durch einen Fahrzeugführer eine entsprechende Vorgabe an einer Betätigungseinrichtung erfolgt ist. Insbesondere handelt es sich bei dieser Betätigungseinrichtung um eine Einrichtung, an welcher eine stufenlose Vorgabe durch den Fahrzeugführer vorgenommen werden kann, wie Beispielsweise ein Bremshebel.

Im Rahmen des erfindungsgemäßen Verfahrens wird ein Notbetrieb des Bremssystems durchgeführt, wenn ein zumindest teilweiser Ausfall der Betriebsbremsanlage erfasst wurde. Wird also erkannt, dass die Betriebsbremsanlage des Bremssystems nicht ordnungsgemäß arbeitet, insbesondere indem in dem Bremssystem ein Druck nicht oder nur in unzureichendem Maße aufgebaut wird, so wird in einen Notbetrieb übergegangen. Dies wird dabei im Sinne der Erfindung bevorzugt bereits ab einem Grad eines Ausfalls der Betriebsbremsanlage durchgeführt, ab welchem ein nur unzureichendes Abbremsen des Nutzfahrzeuges zu befürchten ist.

Die Erfindung umfasst nun die technische Lehre, dass bei der Hilfsbremsanlage die Betätigung der mindestens einen Bremseinrichtung über das mindestens eine Steuergerät durch Ansteuerung mindestens eines Hilfsbremsaktuators eingeleitet wird. Im Zuge des Notbetriebs wird durch das mindestens eine Steuergerät mit Erfassung der Betätigung der mindestens einen Bremsbetätigungseinrichtung auf den Hilfsbremsaktuator zugegriffen, wobei dabei durch das mindestens eine Steuergerät mittels des Hilfsbremsaktuators eine Einstellung einer an einem Grad der Betätigung der mindestens einen Bremsbetätigungseinrichtung orientierten Betätigung der mindestens einen Bremseinrichtung vorgenommen wird.

Mit anderen Worten wird also bei der Hilfsbremsanlage des Bremssystems eine Betätigung der mindestens einen Bremseinrichtung dadurch vorgenommen, dass das mindestens eine Steuergerät eine Ansteuerung mindestens eines Hilfsbremsaktuators vornimmt. Während des Notbetriebs steuert das mindestens eine Steuergerät dann ebenfalls den Hilfsbremsaktuator an, wenn eine Betätigung der mindestens einen Bremsbetätigungseinrichtung der Betriebsbremsanlage erkannt worden ist, also eine Vorgabe des Fahrzeugführers zum Abbremsen des Nutzfahrzeuges vorliegt. Da dieser Wunsch aber aufgrund des zumindest teilweisen Ausfalls der Betriebsbremsanlage nicht oder nur in ungenügendem Maße über die Betriebsbremsanlage umgesetzt werden kann, steuert das mindestens eine Steuergerät den Hilfsbremsaktuator nun so an, dass die Betätigung der mindestens einen Bremseinrichtung über den Hilfsbremsaktuator einer Intensität der Betätigung der mindestens einen Bremsbetätigungseinrichtung der Betriebsbremsanlage nachempfunden ist.

Ein derartiges Verfahren zum Betreiben eines Bremssystems hat dabei den Vorteil, dass auch bei einem zumindest teilweisen Ausfall der Betriebsbremsanlage des Bremssystems dennoch über die Hilfsbremsanlage ein zumindest annähernd ausreichendes Abbremsen des Nutzfahrzeuges hervorgerufen werden kann. Somit wird einem Fahrzeugführer bei Ausfall der Betriebsbremsanlage trotzdem ein Abbremsen des Nutzfahrzeuges ermöglicht, so dass dieser das Nutzfahrzeug zum Stillstand bringen kann. Dies erfolgt hierbei automatisch und ohne zusätzliche Maßnahmen des Fahrzeugführers, indem das mindestens eine Steuergerät im Notbetrieb bei Erfassung der Betätigung der mindestens einen Bremsbetätigungseinrichtung selbstständig eine hieran orientierte Betätigung der mindestens einen Bremseinrichtung durch Zugriff auf den Hilfsbremsaktuator vornimmt. Da eine Ansteuerung des Hilfsbremsaktuators über das mindestens eine Steuergerät erfolgt, kann zudem gleichzeitig ein einfacher Aufbau des Bremssystems realisiert werden. Denn hierdurch kann eine elektronische Betätigung des mindestens einen Hilfsbremsaktuators der Hilfsbremsanlage verwirklicht werden, wodurch zumindest weitestgehend auf hydraulische/pneumatische Komponenten verzichtet werden kann.

Erfindungsgemäß können über die Hilfsbremsanlage mittels des einen Hilfsbremsaktuators oder die mehreren Hilfsbremsaktuatoren dieselben Fahrzeugräder abgebremst werden, welche auch über die Betriebsbremsanlage abbremsbar sind. Insofern hat der mindestens eine Hilfsbremsaktuator innerhalb der Hilfsbremsanlage insbesondere Zugriff auf dieselben Bremseinrichtungen. Besonders bevorzugt werden dabei über einen Hilfsbremsaktuator bei Ansteuerung über das mindestens eine Steuergerät zwei zugeordnete Bremseinrichtungen für Fahrzeugräder einer Fahrzeugachse betätigt.

Zwar erfolgt auch bei der US 2005/0168064 A1 in der Hilfsbremsanlage eine Betätigung der Bremseinrichtungen über ein Steuergerät der Hilfsbremsanlage, indem dieses Steuergerät eine elektronische Ansteuerung von Bremsaktuatoren vornimmt. In dem Notbetrieb wird dann aber keine selbstständige Betätigung der Bremsaktuatoren über das Steuergerät entsprechend der Vorgaben an dem Bremspedal eingeleitet, sondern eine Versorgung der Bremsaktuatoren der Vorderachse des Nutzfahrzeuges aus einem Bremskreis für einen Anhänger des Nutzfahrzeuges wird bei einer Variante der US 2005/0168064 A1 entsprechend der Vorgaben am Handbremshebel der Feststellbremse vorgenommen. Zudem sind der Hilfsbremsanlage und der Betriebsbremsanlage dieselben Bremsaktuatoren zugeordnet.

Im Sinne der Erfindung wird bei dem erfindungsgemäßen Verfahren zum Betreiben eines Bremssystems eine Einleitung der Ansteuerung des mindestens einen Hilfsbremsaktuators über das mindestens eine Steuergerät bevorzugt durch elektronischen Zugriff des Steuergeräts auf den Hilfsbremsaktuator realisiert, wobei das mindestens eine Steuergerät dabei im Rahmen der Erfindung unmittelbar elektronisch auf den mindestens einen Hilfsbremsaktuator zugreifen kann oder aber eine Ansteuerung und damit ein Zugriff über zwischenliegende Komponenten erfolgen kann, beispielsweise weitere Steuergeräte und/oder elektronische Komponenten. Der Hilfsbremsaktuator fungiert besonders bevorzugt auch Feststellbremsaktuator, d.h. der Bremsaktuator der Hilfsbremsanlage wird auch dazu herangezogen, im Rahmen einer Parkbremsfunktion ein Festbremsen des Fahrzeugs vorzunehmen. Insbesondere umfasst der Hilfsbremsaktuator dabei einen Federspeicherzylinder.

Dass im Notbetrieb über das mindestens eine Steuergerät eine Betätigung der mindestens einen Bremseinrichtung an einem Grad der Betätigung der mindestens einen Bremsbetätigungseinrichtung "orientiert" wird, bedeutet im Sinne der Erfindung, dass über das mindestens eine Steuergerät eine derartige Betätigung der mindestens einen Bremseinrichtung über den Hilfsbremsaktuator eingeleitet wird, die möglichst weitgehend einer Vorgabe an der mindestens einen Bremsbetätigungseinrichtung der Betriebsbremsanlage entspricht. Im Rahmen des erfindungsgemäßen Verfahrens wird also während des Notbetriebs über das Steuergerät versucht, den zumindest teilweisen Ausfall der Betriebsbremsanlage so weit wie möglich zu kompensieren und Vorgaben des Fahrzeugführers an der mindestens einen Bremsbetätigungseinrichtung hinsichtlich eines Abbremsens des Nutzfahrzeuges möglichst weitgehend umzusetzen. Besonders bevorzugt wird dabei über das mindestens eine Steuergerät mittels des Hilfsbremsaktuators eine Betätigung der mindestens einen Bremseinrichtung vorgenommen, die der Vorgabe an der mindestens einen Bremsbetätigungseinrichtung entspricht.

Im Rahmen des erfindungsgemäßen Verfahrens wird zudem bevorzugt bei Erfassung des zumindest teilweisen Ausfalls der Betriebsbremsanlage und damit mit Beginn des Notbetriebs eine entsprechende Warnmeldung ausgegeben, um den Fahrzeugführer des Nutzfahrzeuges auf den zumindest teilweisen Ausfall der Betriebsbremsanlage aufmerksam zu machen. Diese Warnmeldung kann dabei als optische und/oder auch akustische Warnmeldung vorliegen.

Entsprechend einer Ausführungsform der Erfindung wird im Zuge des Notbetriebs basierend auf dem Grad der Betätigung der mindestens einen Bremsbetätigungseinrichtung ein gefordertes Bremsmoment bestimmt, wobei das geforderte Bremsmoment anschließend für die Einstellung der Ansteuerung des mindestens einen Hilfsbremsaktuators herangezogen wird. Im Rahmen des Notbetriebs wird also anhand der Vorgabe des Fahrzeugführers an der mindestens einen Bremsbetätigungseinrichtung ermittelt, welches Bremsmoment an den Bremseinrichtungen einzustellen ist. Dieses geforderte Bremsmoment wird dann anschließend dazu verwendet, eine Ansteuerung des mindestens einen Hilfsbremsaktuators einzustellen, um somit das geforderte Bremsmoment über den mindestens einen Hilfsbremsaktuators an den zugehörigen Bremseinrichtungen zumindest im Wesentlichen hervorzurufen. Besonders bevorzugt wird die Bestimmung des geforderten Bremsmoments dabei ebenfalls durch das mindestens eine Steuergerät durchgeführt, wobei das mindestens eine Steuergerät dazu mit Informationen über den Betätigungsgrad der mindestens einen Bremsbetätigungseinrichtung versorgt wird. Insbesondere steht das mindestens eine Steuergerät zu diesem Zweck mit einer Sensorik in Datenaustausch, die den Grad der Betätigung der mindestens einen Bremsbetätigungseinrichtung erfasst.

Gemäß einer Ausgestaltungsmöglichkeit der Erfindung wird als zumindest teilweiser Ausfall eine zumindest zu niedrige Druckversorgung des zumindest einen zugehörigen Betriebsbremsaktuators über eine Druckquelle erfasst, mit welcher der zumindest eine zugeordnete Betriebsbremsaktuator bei Erfassung der Betätigung der mindestens einen Bremsbetätigungseinrichtung verbunden wird. Wird also erkannt, dass keine Druckversorgung oder eine zur Darstellung eines geforderten Bremsmoments zu niedrige Druckversorgung des jeweiligen Betriebsbremsaktuators in der Betriebsbremsanlage gegeben ist, so wird in den Notbetrieb übergegangen und damit über das mindestens eine Steuergerät die Betätigung mittels des Hilfsbremsaktuators selbstständig vorgenommen. Der zumindest eine zugehörige Betriebsbremsaktuator und die Druckquelle sind hierzu bevorzugt in einem Bremskreis der Betriebsbremsanlage eingebunden, wobei es sich je nach Art des Aktuators dabei um einen hydraulischen oder pneumatischen Bremskreis handeln kann, in welchem eine Versorgung des Aktuators mit Hydraulikflüssigkeit oder mit Druckluft darstellbar ist.

In Weiterbildung der vorgenannten Ausgestaltungsmöglichkeit wird die zumindest zu niedrige Druckversorgung in der Betriebsbremsanlage über eine Sensorik erfasst, bei welcher es sich bevorzugt um einen Drucksensor handelt. Hierdurch besteht auf einfache Art und Weise die Möglichkeit, auf eine zu niedrige Druckversorgung schließen zu können.

Es ist eine Ausführungsform der Erfindung, dass die Ansteuerung des mindestens einen Hilfsbremsaktuators über ein erstes Steuergerät eingeleitet wird, bei welchem es sich insbesondere um ein Bremssteuergerät handelt. Zu diesem Zweck wird zwischen dem ersten Steuergerät und einem zweiten Steuergerät eine Datenübertragung in einem Datenübertragungssystem vorgenommen, wobei es sich bei dem zweiten Steuergerät dabei um ein Getriebesteuergerät handeln kann. Über das zweite Steuergerät wird dann entsprechend einer Vorgabe des ersten Steuergeräts die Ansteuerung des Hilfsbremsaktuators durchgeführt. In vorteilhafter Weise kann hierdurch eine mittelbare Ansteuerung des mindestens einen Hilfsbremsaktuators über das erste Steuergerät durch Kommunikation mit dem zweiten Steuergerät vorgenommen werden, welches dann die Vorgaben des ersten Steuergeräts durch unmittelbare Ansteuerung des Hilfsbremsaktuators umsetzt.

In Weiterbildung der Erfindung wird bei der Hilfsbremsanlage eine Betätigung der mindestens einen Bremseinrichtung durchgeführt, indem bei dem mindestens einen Hilfsbremsaktuator je ein Fluidzylinder druckentlastet wird, der mit einem in eine Betätigungsstellung vorgespannten Betätigungskolben ausgestattet ist. Insofern wird also eine Betätigung der mindestens einen Bremseinrichtung über den mindestens einen Hilfsbremsaktuator dann vorgenommen, wenn der jeweilige Fluidzylinder des Hilfsbremsaktuators druckentlastet wird. Dazu ist der jeweilige Fluidzylinder als inverser Fluidzylinder ausgebildet.

Dazu ist der Betätigungskolben des Fluidzylinder in eine Betätigungsstellung vorgespannt, wobei der Betätigungskolben durch Druckversorgung des Fluidzylinders mit Fluid in eine Öffnungsstellung überführt wird, in welcher die Betätigung der mindestens einen Bremseinrichtung über den Hilfsbremsaktuator aufgehoben ist. Dementsprechend ist bei Versorgung des jeweiligen Fluidzylinders des Hilfsbremsaktuators mit Fluid in Abhängigkeit des Drucks eine Betätigung der mindestens einen Bremseinrichtung vermindert oder sogar aufgehoben, während bei fehlender Versorgung mit Fluid und der hiermit einhergehenden Druckentlastung aufgrund der Vorspannung des Betätigungskolbens eine Betätigung der mindestens einen Bremseinrichtung über den Hilfsbremsaktuator erfolgt.

Besonders bevorzugt ist bei der Hilfsbremsanlage zudem mindestens ein Ventil vorgesehen, über welches ein Druck der Versorgung des je einen Fluidzylinders des mindestens einen Hilfsbremsaktuators eingestellt werden kann. Dies ist im Rahmen der Erfindung notwendig, um durch Steuerung des Drucks auch die Betätigung der mindestens einen Bremseinrichtung über den Hilfsbremsaktuator einzustellen. Denn zur Realisierung des Notbetriebs ist eine dosierte Betätigung der mindestens einen Bremseinrichtung über den Hilfsbremsaktuator notwendig. So kann für die Einstellung des Drucks ein Proportionalventil oder auch eine Kombination mehrerer Ventile vorgesehen sein.

Gegenstand der Erfindung ist zudem ein Steuergerät, welches dazu eingerichtet ist, bei einer Hilfsbremsanlage eines Bremssystems eines Nutzfahrzeuges eine Ansteuerung mindestens eines Hilfsbremsaktuators zur Betätigung von mindestens einer Bremseinrichtung je eines Fahrzeugrades einzuleiten. Des Weiteren ist das Steuergerät dazu ausgebildet, bei Erfassung eines zumindest teilweisen Ausfalls einer Betriebsbremsanlage des Bremssystems einen Notbetrieb einzuleiten, im Zuge des Notbetriebs mit Erfassung einer Betätigung mindestens einer Bremsbetätigungseinrichtung der Betriebsbremsanlage auf den mindestens einen Hilfsbremsaktuator zuzugreifen und dabei über den Hilfsbremsaktuator eine an einem Grad einer Betätigung der mindestens einen Bremsbetätigungseinrichtung orientierte Betätigung der mindestens einen Bremseinrichtung einzuleiten.

Eine derartige Ausgestaltung eines Steuergeräts und dessen Verwendung in einem Bremssystem eines Nutzfahrzeuges hat dabei den Vorteil, dass bei einem zumindest teilweisen Ausfall der Betriebsbremsanlage des Bremssystems über das Steuergerät auf den mindestens einen Hilfsbremsaktuator der Hilfsbremsanlage selbstständig zugegriffen werden kann, um im Folgenden durch Betätigung mindestens einer Bremseinrichtung über den Hilfsbremsaktuator ein Abbremsen herbeizuführen, welches an einer Vorgabe eines Fahrzeugführers über mindestens eine Bremsbetätigungseinrichtung orientiert ist. Dies lässt sich dabei zudem bei kompaktem Aufbau durch einen unmittelbaren oder mittelbaren, elektronischen Zugriff des Steuergeräts auf den mindestens einen Hilfsbremsaktuator verwirklichen. Dabei handelt es sich bei dem Steuergerät insbesondere um ein Bremssteuergerät des Bremssystems.

Im Weiteren ist das erfindungsgemäße Steuergerät dann bevorzugt so ausgestaltet, dass sich ein Verfahren zum Betreiben eines Bremssystems gemäß einer oder mehrerer der vorstehend beschriebenen Varianten realisieren lässt.

Ein vorgenanntes Steuergerät ist dabei bevorzugt Teil eines Bremssystems für ein Nutzfahrzeug, wobei dieses Bremssystem eine Betriebsbremsanlage, eine Hilfsbremsanlage, Bremseinrichtungen für Fahrzeugräder des Nutzfahrzeuges und zumindest das erfindungsgemäße Steuergerät umfasst. Dabei weist die Betriebsbremsanlage mindestens eine Bremsbetätigungseinrichtung auf, über welche bei Betätigung in einem Normalbetrieb je mindestens ein zugehöriger Betriebsbremsaktuator angesteuert werden kann, wobei der mindestens eine zugehörige Betriebsbremsaktuator bei Ansteuerung im Normalbetrieb eine der Betätigung der mindestens einen Bremsbetätigungseinrichtung entsprechende Betätigung der jeweils zugeordneten Bremseinrichtung vornimmt. Ferner weist die Hilfsbremsanlage einen Hilfsbremsaktuator aufweist, der über das Steuergerät ansteuerbar ist und bei Ansteuerung eine Betätigung zumindest einer der Bremseinrichtungen vornimmt.

Das erfindungsgemäße Steuergerät greift dann, wie vorstehend beschrieben, bei einem zumindest teilweisen Ausfall der Betriebsbremsanlage mit Erfassung der Betätigung der mindestens einen Bremsbetätigungseinrichtung auf den Hilfsbremsaktuator zu und nimmt dabei über den Hilfsbremsaktuator eine an einem Grad der Betätigung der mindestens einen Bremsbetätigungseinrichtung orientierte Betätigung der mindestens einen Bremseinrichtung vor. Somit kann ein zuverlässiges Bremssystem für ein Nutzfahrzeug verwirklicht werden, bei welchem auch bei einem zumindest teilweise stattfindenden Ausfall der Betriebsbremsanlage über das Steuergerät und somit ohne aktive Handlung eines Fahrzeugführers ein Abbremsen des Nutzfahrzeuges auf eine Vorgabe des Fahrzeugführers hin herbeigeführt werden kann. Dabei kann das Bremssystem des Nutzfahrzeuges im Rahmen des erfindungsgemäßen Verfahrens auf die im Vorfeld beschriebenen Art und Weisen betrieben werden.

Bei dem vorgenannten Bremssystem sind ein erstes Steuergerät und ein zweites Steuergerät vorgesehen, die in einem Datenübertragungssystem, bevorzugt einem CAN-Bus, miteinander verbunden sind. Während es sich bei dem ersten Steuergerät dabei um ein Bremssteuergerät handelt, ist das zweite Steuergerät als Getriebesteuergerät eines Getriebes, welches im Bereich einer Achse des Nutzfahrzeuges angeordnet ist. Dabei kann über das zweite Steuergerät die Ansteuerung des Hilfsbremsaktuators vorgenommen werden. Das Getriebesteuergerät ist insbesondere dann realisiert, wenn der Hilfsbremsaktuator im Bereich des Getriebes platziert oder sogar mit in dieses integriert ist.

In Weiterbildung eines Bremssystems weist der Hilfsbremsaktuator ein Fluidzylinder mit einem Betätigungskolben auf, der in eine Betätigungsstellung vorgespannt ist. Dabei kann der Betätigungskolben durch Druckversorgung des Fluidzylinders mit Fluid in eine Öffnungsstellung überführt werden, in welcher die Betätigung der mindestens einen Bremseinrichtung über den Hilfsbremsaktuator aufgehoben ist. Dementsprechend ist der Fluidzylinder des jeweiligen Hilfsbremsaktuators als inverser Fluidzylinder ausgebildet, indem über den Fluidzylinder bei Druckversorgung in Abhängigkeit eines Drucks eine Betätigung der mindestens einen Bremseinrichtung reduziert oder aufgehoben ist, wohingegen der Fluidzylinder bei fehlender Druckversorgung eine Betätigung der mindestens einen Bremseinrichtung herbeiführt.

Bei der Betriebsbremsanlage des Bremssystems ist der mindestens eine zugehörige Betriebsbremsaktuator in je einem Bremskreis angeordnet, in welchem im Normalbetrieb des Bremssystems eine Steuerung des je zugehörigen Betriebsbremsaktuators in Abhängigkeit der Betätigung der mindestens einen Bremsbetätigungseinrichtung stattfindet. Bevorzugt ist der je einen Bremskreis dabei als Hydraulikkreis ausgeführt, in welchem Fluid in Form von Hydraulikflüssigkeit vorgesehen ist. Dabei sind die Betriebsbremsaktuatoren dann als hydraulische Aktuatoren ausgestaltet. Alternativ dazu kann Fluid des Bremskreises aber auch als Druckluft vorliegen, wobei die Komponenten und die Betriebsbremsaktuatoren in dem Bremskreis dann als pneumatische Komponenten vorliegen.

In dem Bremskreis kann zudem eine Ventilplatte vorgesehen sein, über welche im Normalbetrieb des Bremssystems durch entsprechende Ventile eine Betätigung der mindestens einen Bremsbetätigungseinrichtung in entsprechende Drücke zur Steuerung der Betriebsbremsaktuatoren umgesetzt wird.

Alternativ, bevorzugt aber ergänzend zu der vorgenannten Variante kann in mindestens einem Bremskreis, in welchem die Betriebsbremsaktuatoren steuerbar sind, eine Sensorik vorgesehen sein, über welche ein Druck von Fluid des mindestens einen Bremskreises überwacht werden kann. Über diese Sensorik kann dabei auf den zumindest teilweisen Ausfall der Betriebsbremsanlage geschlossen werden, wenn eine Versorgung der Betriebsbremsaktuatoren nicht oder nur ungenügenden Maße stattfindet. Besonders bevorzugt wird die Sensorik dabei durch einen Drucksensor gebildet, mittels welchem ein Fluiddruck in dem mindestens einen Bremskreis bestimmt werden kann. Ein derartiger Drucksensor kann dabei an einem Ventilblock des mindestens einen Bremskreises vorgesehen sein.

Die Erfindung betrifft zudem ein Nutzfahrzeug, bei welchem ein Bremssystem entsprechend einer oder mehrerer der vorgenannten Varianten vorgesehen ist. Dabei handelt es sich bei dem Nutzfahrzeug bevorzugt um ein landwirtschaftliches oder kommunales Nutzfahrzeug und hierbei insbesondere um einen Ackerschlepper.

Die Erfindung ist nicht auf die angegebene Kombination der nebengeordneten oder der hiervon abhängigen Ansprüche beschränkt. Es ergeben sich darüber hinaus Möglichkeiten, einzelne Merkmale, auch soweit sie aus den Ansprüchen, der nachfolgenden Beschreibung einer bevorzugten Ausführungsform der Erfindung oder unmittelbar aus den Zeichnungen hervorgehen, miteinander zu kombinieren. Die Bezugnahme der Ansprüche auf die Zeichnungen durch Verwendung von Bezugszeichen soll den Schutzumfang der Ansprüche nicht beschränken.

Eine vorteilhafte Ausführungsform der Erfindung, die nachfolgend erläutert wird, ist in den Zeichnungen dargestellt. Es zeigt:
- Fig. 1: eine schematische Ansicht eines Bremssystems eines Nutzfahrzeuges, entsprechend einer bevorzugten Ausführungsform der Erfindung;
- Fig. 2: eine Darstellung des Bremssystems aus Fig. 1, gezeigt in einem Normalbetrieb und in einem ersten Betätigungszustand;
- Fig. 3: eine Darstellung des Bremssystems aus Fig. 1, gezeigt in dem Normalbetrieb und in einem zweiten Betätigungszustand; und
- Fig. 4: eine Darstellung des Bremssystems aus Fig. 1, gezeigt in einem Notbetrieb.

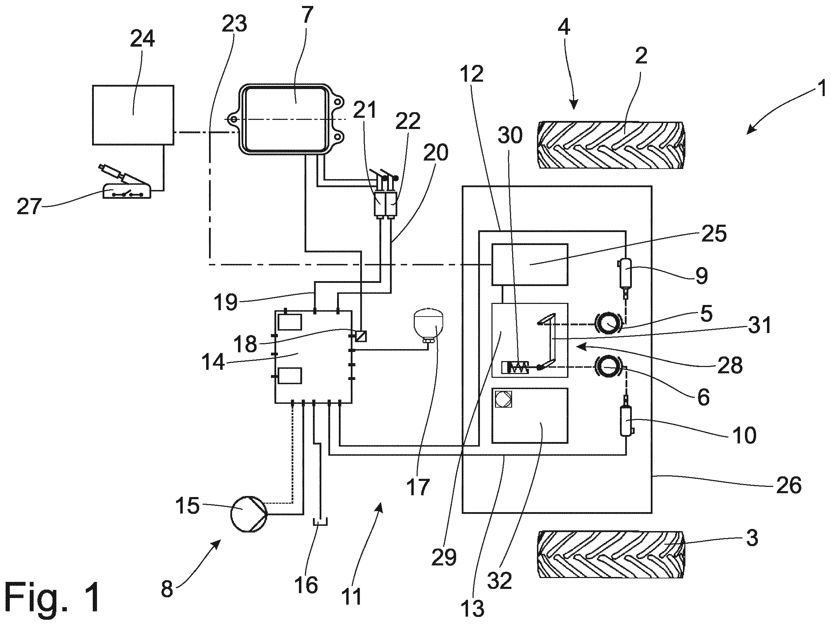

Aus Fig. 1 geht eine schematische Ansicht eines Bremssystems 1 eines Nutzfahrzeuges hervor, bei welchem es sich insbesondere um ein landwirtschaftliches Nutzfahrzeug in Form eines Ackerschleppers handelt. Das Bremssystem 1 ist dabei entsprechend einer bevorzugten Ausführungsform der Erfindung gestaltet und dient dem Bremsen von Fahrzeugrädern 2 und 3 einer Fahrzeugachse 4 des Nutzfahrzeuges, bei welcher es sich vorliegend um eine Hinterachse des Nutzfahrzeuges handelt. Innerhalb des Bremssystems 1 kann aber im Rahmen der Erfindung auch zusätzlich eine weitere Fahrzeugachse, insbesondere eine Vorderachse des Nutzfahrzeuges, mit bremsbaren Fahrzeugrädern vorgesehen sein, wobei diese weitere Fahrzeugachse in analoger Weise mit einem Bremssystem zum Bremsen der Fahrzeugräder ausgestattet sein kann.

Jedem der Fahrzeugräder 2 und 3 ist seitens des Bremssystems 1 je eine Bremseinrichtung 5 bzw. 6 zugeordnet, wobei die Bremseinrichtungen 5 und 6 dabei vorliegend in Form von Scheibenbremsen ausgeführt sind. Konkret kann es sich bei den Scheibenbremsen dabei um nasse Mehrscheibenbremsen handeln. Dabei sorgt die einzelne Bremseinrichtung 5 bzw. 6 bei Betätigung für ein Abbremsen bzw. Festbremsen des zugehörigen Fahrzeugrades 2 bzw. 3.

Das erfindungsgemäße Bremssystem 1 umfasst ein Steuergerät 7 in Form eines Bremssteuergerät sowie eine Betriebsbremsanlage 8. Innerhalb der Betriebsbremsanlage 8 sind dabei zwei Betriebsbremsaktuatoren 9 und 10 mit hydraulischen Fluidzylindern vorgesehen, wobei der Betriebsbremsaktuator 9 bei Druckbeaufschlagung eine Betätigung der Bremseinrichtung 5 und der Betriebsbremsaktuator 10 bei Druckbeaufschlagung eine Betätigung der Bremseinrichtung 6 vornimmt. Dabei wird auf dem Fachmann prinzipiell bekannte Art und Weise bei Versorgung des jeweiligen Fluidzylinders des Betriebsbremsaktuators 9 bzw. 10 mit Hydraulikflüssigkeit eine Verschiebung eines jeweiligen Kolbens hervorgerufen, der mit der je zugehörigen Bremseinrichtung 5 bzw. 6 gekoppelt ist, wobei dies bevorzugt über eine jeweilige Kugelrampe realisiert ist. Dementsprechend wird bei Verschiebung des Kolbens des jeweiligen Fluidzylinders aufgrund der Koppelung eine Betätigung der je zugehörigen Bremseinrichtung 5 bzw. 6 dargestellt.

Die Betriebsbremsaktuatoren 9 und 10 sind vorliegend in einem hydraulischen Bremskreis 11 eingebunden, indem sie über Leitungen 12 und 13 mit einem Ventilblock 14 verbunden sind. Mit diesem Ventilblock 14 sind außerdem in dem Bremskreis 11 eine Druckquelle 15 in Form einer Hydraulikpumpe des Nutzfahrzeuges, ein Tank 16 für Hydraulikflüssigkeit, ein Druckspeicher 17, ein Drucksensor 18 und zwei weitere Leitungen 19 und 20 verbunden. Dabei kann über den Drucksensor 18 der in dem Bremskreis 11 vorherrschende Vorratsdruck der Hydraulikflüssigkeit bestimmt werden.

Vorliegend ist an den Leitungen 19 und 20 jeweils je eine Bremsbetätigungseinrichtung 21 bzw. 22 angebunden, wobei die Bremsbetätigungseinrichtungen 21 und 22 dabei jeweils als Bremspedale vorliegen, über die ein Fahrzeugführer des Nutzfahrzeuges eine Betätigung der Betriebsbremsaktuatoren 9 und 10 der Betriebsbremsanlage 8 vornehmen kann. Dabei wird ein Grad einer Betätigung der jeweiligen Bremsbetätigungseinrichtung 21 bzw. 22 sensorisch erfasst und durch das Steuergerät 7 ermittelt. Ebenso erfasst das Steuergerät 7 noch den über den Drucksensor 18 bestimmten Druck im Bremskreis 11.

Wie in Fig. 1 zu erkennen ist, ist das Steuergerät 7 in einem Datenübertragungssystem in Form eines CAN-Bus 23 noch mit zwei weiteren Steuergeräten 24 und 25 verbunden, von welchen es sich bei dem Steuergerät 24 um ein Fahrzeugsteuergerät und bei dem Steuergerät 25 um ein Getriebesteuergerät eines Getriebes 26 handelt. Das Getriebe 26 ist dabei im Bereich der Fahrzeugachse 4 platziert.

Von den Steuergeräten 24 und 25 steht das Steuergerät 24 mit einer Betätigungseinrichtung 27 einer Hilfsbremsanlage 28 in Verbindung, wobei diese Betätigungseinrichtung 27 dabei als Bremshebel vorliegt. Über das Steuergerät 24 wird dabei eine Betätigungsstellung dieses Bremshebels erfasst. Die Hilfsbremsanlage 28 ist dabei innerhalb des Bremssystems 1 im Normalbetrieb zur Darstellung einer Parkbremsfunktion für ein Festbremsen der beiden Fahrzeugräder 2 und 3 vorgesehen, um das Nutzfahrzeug in einer jeweils aktuellen Position zu halten. Dabei erfolgt dieses Festbremsen im Normalbetrieb des Bremssystems 1 bei entsprechender Vorgabe durch den Fahrzeugführer über die Betätigungseinrichtung 27.

Der Hilfsbremsanlage 28 ist zu diesem Zweck ein Hilfsbremsaktuator 29 zugeordnet, der vorliegend mit in das Getriebe 26 im Bereich der Fahrzeugachse 4 integriert ist. Dabei umfasst dieser Hilfsbremsaktuator 29 einen Fluidzylinder 30, bei dem ein Betätigungskolben über ein Federelement in eine Betätigungsstellung vorgespannt ist, in welcher der Betätigungskolben über eine Brücke 31 auf die beiden Bremseinrichtungen 5 und 6 einwirkt und diese betätigt. Der Fluidzylinder 30 wird invers zu einer Betätigung der Betätigungseinrichtung 27 mit Fluid aus einer Druckquelle 32 des Getriebes 26 mit Hydraulikflüssigkeit versorgt, so dass im Normalbetrieb in einem gelösten Zustand der Betätigungseinrichtung 27 eine Druckbeaufschlagung des Fluidzylinders 30 und damit eine Bewegung des Betätigungskolbens entgegen dem Federelement eingeleitet wird, wodurch eine Betätigung der Bremseinrichtungen 5 und 6 über den Hilfsbremsaktuator 29 aufgehoben ist. Wird die Betätigungseinrichtung 27 hingegen über den Fahrzeugführer betätigt, so wird der Fluidzylinder 30 zunehmend druckentlastet und damit aufgrund der Wirkung des Federelements über den Betätigungskolben des Fluidzylinders 30 auch eine zunehmende Betätigung der Bremseinrichtungen 5 und 6 herbeigeführt. Um dabei einen Grad der Betätigung einstellen zu können, ist dem Hilfsbremsaktuator 29 mindestens ein - vorliegend nicht dargestelltes - Ventil zugeordnet, wobei dieses mindestens eine Ventil über das Steuergerät 25 geregelt wird. Der erforderliche Grad der Betätigung wird dem Steuergerät 25 dabei innerhalb des CAN-Bus 23 durch das Steuergerät 24 mitgeteilt.

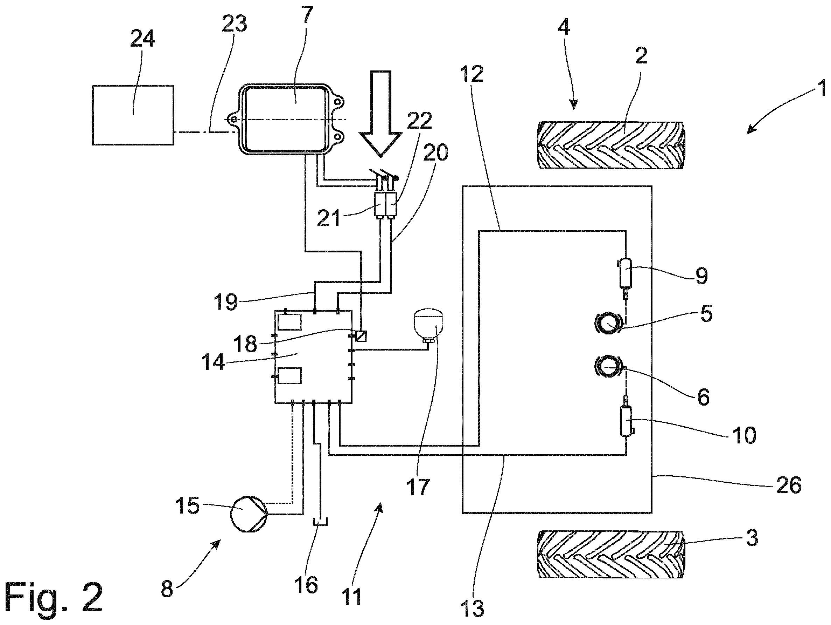

In den Fig. 2 bis 4 sind unterschiedliche Zustände des Bremssystems 1 aus Fig. 1 dargestellt, wobei hierbei nur die jeweils aktuell aktiv an einem Bremsvorgang teilnehmenden Komponenten gezeigt sind. So zeigt Fig. 2 einen Zustand des Bremssystems 1 bei Nutzung der Betriebsbremse, wobei hierbei durch einen Fahrzeugführer eine Betätigung der Bremsbetätigungseinrichtungen 21 und 22 stattfindet. Dabei wird an dem Ventilblock 14 eine Betätigung der einzelnen Bremsbetätigungseinrichtung 21 bzw. 22 in eine Einstellung eines entsprechenden Drucks in den Leitungen 12 und 13 umgesetzt. Die Betriebsbremsaktuatoren 9 und 10 betätigen in der Folge die beiden Bremseinrichtungen 5 und 6, so dass es zu einem entsprechenden Abbremsen der Fahrzeugräder 2 und 3 kommt. Dabei kann über den Fahrzeugführer auch eine unterschiedliche Betätigung der Bremsbetätigungseinrichtungen 21 und 22 oder auch nur einer der Bremsbetätigungseinrichtungen 21 oder 22 vorgenommen werden, um durch eine einseitig stärkere oder lediglich einseitige Betätigung und über eine der Bremseinrichtungen 9 oder 10 die Funktion einer Lenkbremse des Nutzfahrzeuges zu verwirklichen.

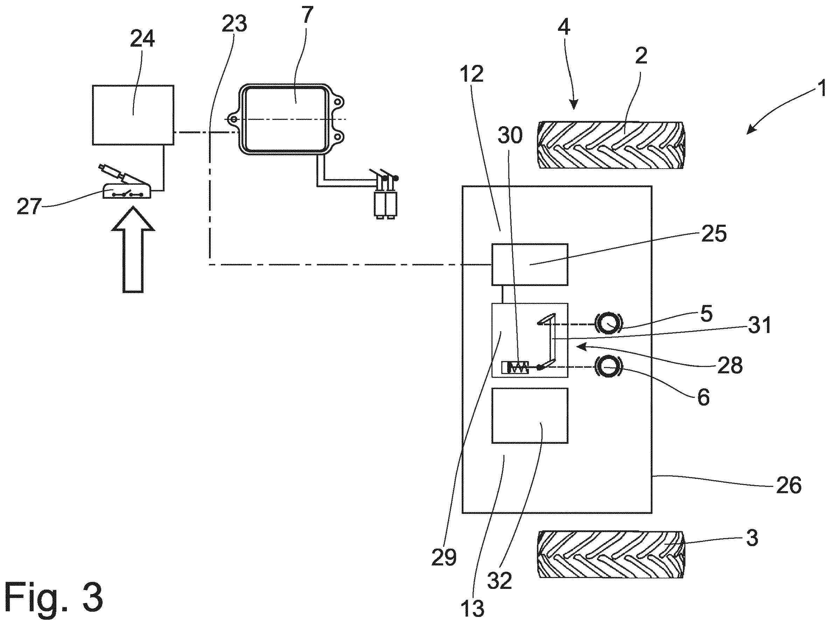

Aus Fig. 3 geht ein weiterer Zustand des Bremssystems 1 hervor, wobei in Fig. 3 dabei die Situation einer Betätigung der Betätigungseinrichtung 27 der durch den Fahrzeugführer und ein Betrieb der Hilfsbremsanlage 28 als Feststellbremse gezeigt ist. Ein jeweiliger Grad der Betätigung der Betätigungseinrichtung 27 wird dabei durch das Steuergerät 24 erfasst und mittels des CAN-Bus 23 an das Steuergerät 25 übermittelt, welches daraufhin eine Ansteuerung des Hilfsbremsaktuators 29 vornimmt, um über den Hilfsbremsaktuator 29 eine dem Grad der Betätigung der Betätigungseinrichtung 27 entsprechende Betätigung der Bremseinrichtungen 5 und 6 über die Brücke 31 herbeizuführen. Dabei wird über das Steuergerät 25 mit zunehmenden Betätigungsgrad der Betätigungseinrichtung 27 eine zunehmende Druckentlastung des Fluidzylinders 30 eingeleitet.

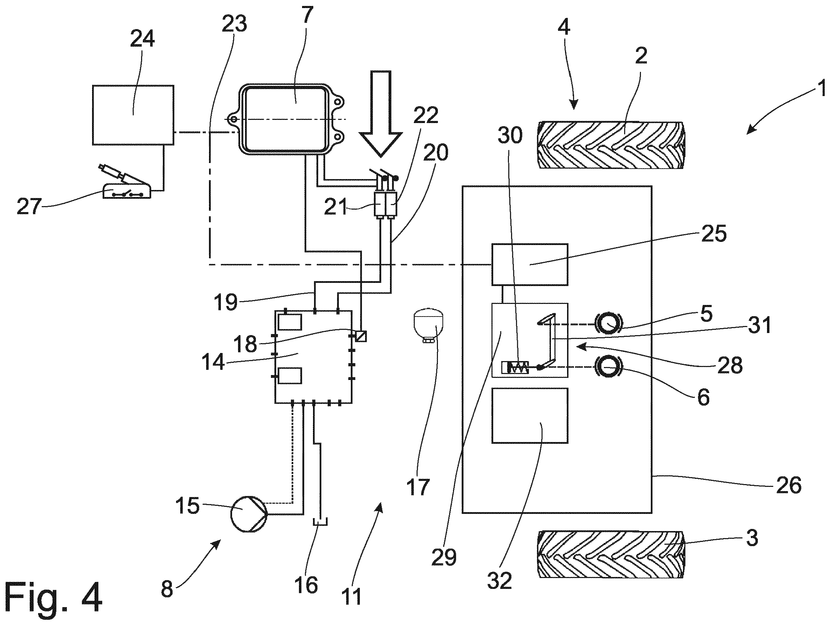

Schließlich zeigt noch Fig. 4 den Zustand des Bremssystems 1 in einem Notbetrieb aufgrund eines zumindest teilweisen Ausfalls der Betriebsbremsanlage 8. Grund für den Ausfall der Betriebsbremsanlage 8 könnte dabei ein Ausfall der Druckquelle 15, Leckagen im Bereich der Leitungen 12 und 13 oder auch ein Ausfall eines oder beider Betriebsbremsaktuatoren 9 und 10 sein. Insbesondere die beiden erstgenannten Ausfallgründe werden dabei durch das Steuergerät 7 mittels des Drucksensors 18 erfasst, wobei das Steuergerät 7 dann bei Erfassung eines zu niedrigen Drucks des Fluids im Bremskreis 11 eine Einleitung des Notbetriebs vornimmt. Bevorzugt wird dies dem Fahrzeugführer zudem optisch anhand einer Warnlampe und/oder akustisch über ein Warnsignal angezeigt.

Als Besonderheit sorgt das Steuergerät 7 dann bei Betätigung der Bremsbetätigungseinrichtungen 21 und 22 selbstständig dafür, dass das an den Bremsbetätigungseinrichtungen 21 und 22 durch den Fahrzeugführer vorgegebene Abbremsen der Fahrzeugräder 2 und 3 herbeigeführt wird. Zu diesem Zweck leitet das Steuergerät 7 über das Steuergerät 25 mittels des CAN-Bus 23 eine Betätigung des Hilfsbremsaktuators 29 ein, wobei dabei über den Hilfsbremsaktuator 29 eine Betätigung der Bremseinrichtungen 5 und 6 entsprechend der Vorgabe des Fahrzeugführers an den Bremsbetätigungseinrichtungen 21 und 22 umgesetzt wird. Dabei erfasst das Steuergerät 7 den Grad der Betätigung der Bremsbetätigungseinrichtungen 21 und 22, wobei das Steuergerät 7 mittels des Steuergeräts 25 mit zunehmendem Grad eine zunehmende Druckentlastung des Fluidzylinders 30 des Hilfsbremsaktuators 29 herbeiführt. Im Endeffekt wird im Notbetrieb dadurch eine Bremsvorgabe des Fahrzeugführers an den Bremsbetätigungseinrichtungen 21 und 22 automatisch mittels der Hilfsbremsanlage 28 in ein gefordertes Abbremsen der Fahrzeugräder 2 und 3 der Fahrzeugachse 4 umgesetzt.

Dies hat zur Folge, dass bei einem nur teilweisen Druckausfall in der Betriebsbremsanlage 8 die Bremsanforderung automatisch so berechnet wird, dass nur ein fehlender Unterschied zum Fahrerwunsch über die Hilfsbremsanlage 28 eingespeist wird.

Dabei addiert sich die über die Hilfsbremsanlage 28 aufgebrachte Bremskraft mechanisch zu der durch den Restdruck in der Betriebsbremsanlage 8 über die Betriebsbremsaktuatoren 9 und 10 erzeugten Kräfte. Dies geschieht automatisch und dynamisch. Auch bei während der Bremsung weiter abfallendem Druck in der Betriebsbremsanlage 8 wird die kompensierende Bremsanforderung an die Hilfsbremsanlage 28 automatisch nachgeregelt. Bei Komplettausfall des Druckes in der Betriebsbremsanlage 8 ergibt sich durch diese Regelung zwanglos und automatisch, dass der Fahrerbremswunsch zu 100% an die Hilfsbremsanlage 28 ausgesteuert wird.

Mittels eines erfindungsgemäßen Verfahrens zum Betreiben eines Bremssystems kann bei kompaktem Aufbau im Falle eines zumindest teilweisen Ausfalls einer Betriebsbremsanlage dennoch ein zuverlässiges Abbremsen eines Nutzfahrzeuges verwirklicht werden.

### Bezugszeichen

- 1: Bremssystem
- 2: Fahrzeugrad
- 3: Fahrzeugrad
- 4: Fahrzeugachse
- 5: Bremseinrichtung
- 6: Bremseinrichtung
- 7: Steuergerät
- 8: Betriebsbremsanlage
- 9: Betriebsbremsaktuator
- 10: Betriebsbremsaktuator
- 11: Bremskreis
- 12: Leitung
- 13: Leitung
- 14: Ventilblock
- 15: Druckquelle
- 16: Tank
- 17: Druckspeicher
- 18: Drucksensor
- 19: Leitung
- 20: Leitung
- 21: Bremsbetätigungseinrichtung
- 22: Bremsbetätigungseinrichtung
- 23: CAN-Bus
- 24: Steuergerät
- 25: Steuergerät
- 26: Getriebe
- 27: Betätigungseinrichtung
- 28: Hilfsbremsanlage
- 29: Hilfsbremsaktuator
- 30: Fluidzylinder
- 31: Brücke
- 32: Druckquelle

## Patentansprüche

1. Verfahren zum Betreiben eines Bremssystems (1) eines Nutzfahrzeuges, wobei das Bremssystem (1) eine Betriebsbremsanlage (8), ein Bremssteuergerät (7), eine Hilfsbremsanlage (28) und Bremseinrichtungen (5, 6) für Fahrzeugräder (2, 3) einer Fahrzeugachse (4) des Nutzfahrzeuges aufweist, wobei es sich bei der Fahrzeugachse (4) um eine Hinterachse des Nutzfahrzeugs handelt, wobei bei der Betriebsbremsanlage (8) in einem Normalbetrieb bei Betätigung mindestens einer Bremsbetätigungseinrichtung (21, 22) zumindest ein zugeordneter Betriebsbremsaktuator (9, 10) angesteuert wird, über welchen mit Ansteuerung eine der Betätigung der mindestens einen Bremsbetätigungseinrichtung (21, 22) entsprechende Betätigung der jeweils zugehörigen Bremseinrichtung (5, 6) vorgenommen wird, wobei die Hilfsbremsanlage (28) im Normalbetrieb zur Darstellung einer Parkbremsfunktion vorgesehen ist, wobei bei der Hilfsbremsanlage (28) über mindestens ein Getriebesteuergerät (25) eine Betätigung von mindestens einer der Bremseinrichtungen (5, 6) einleitbar ist, und wobei bei Erfassung eines zumindest teilweisen Ausfalls der Betriebsbremsanlage (8) in Form eines Ausfalls einer Druckquelle (15) der Betriebsbremsanlage (8), Leckagen im Bereich von Leitungen (12, 13) oder eines Ausfalls eines oder beider Betriebsbremsaktuatoren (9, 10) ein Notbetrieb durchgeführt wird, **dadurch gekennzeichnet, dass** bei der Hilfsbremsanlage (28) die Betätigung der mindestens einen Bremseinrichtung (5, 6) über das Getriebesteuergerät (25) durch Ansteuerung mindestens eines Hilfsbremsaktuators (29) eingeleitet wird, dass im Zuge des Notbetriebs durch das Bremssteuergerät (7) mit Erfassung der Betätigung der mindestens einen Bremsbetätigungseinrichtung (21, 22) auf den Hilfsbremsaktuator (29) zugegriffen wird, und dass dabei durch das Bremssteuergerät (7) mittels des Hilfsbremsaktuators (29) eine Einstellung einer an einem Grad der Betätigung der mindestens einen Bremsbetätigungseinrichtung (21, 22) orientierten Betätigung der mindestens einen Bremseinrichtung (5, 6) vorgenommen wird, wobei der Hilfsbremsaktuator (29) und die Betriebsbremsaktuatoren (9, 10) auf dieselbe Bremseinrichtung (5, 6) wirken.

2. Verfahren nach Anspruch 1, **dadurch gekennzeichnet, dass** im Zuge des Notbetriebs basierend auf dem Grad der Betätigung der mindestens einen Bremsbetätigungseinrichtung (21, 22) ein gefordertes Bremsmoment bestimmt wird, wobei das geforderte Bremsmoment anschließend für die Einstellung der Ansteuerung des mindestens einen Hilfsbremsaktuators (29) herangezogen wird.

3. Verfahren nach Anspruch 1 oder 2, **dadurch gekennzeichnet, dass** als zumindest teilweiser Ausfall eine zumindest zu niedrige Druckversorgung des zumindest einen zugehörigen Betriebsbremsaktuators (9, 10) über eine Druckquelle (15) erfasst wird, mit welcher der zumindest eine zugeordnete Betriebsbremsaktuator (9, 10) bei Erfassung der Betätigung der mindestens einen Bremsbetätigungseinrichtung (21, 22) verbunden wird.

4. Verfahren nach Anspruch 3, **dadurch gekennzeichnet, dass** die zumindest zu niedrige Druckversorgung in der Betriebsbremsanlage (8) über einen Drucksensor (18) erfasst wird.

5. Verfahren nach einem der vorhergehenden Ansprüche, **dadurch gekennzeichnet, dass** die Ansteuerung des mindestens einen Hilfsbremsaktuators (29) über das Bremssteuergerät (7) eingeleitet wird, wozu zwischen dem Bremssteuergerät (7) und dem Getriebesteuergerät (25) eine Datenübertragung in einem Datenübertragungssystem vorgenommen wird, wobei über das Getriebesteuergerät (25) dann entsprechend einer Vorgabe des ersten Bremssteuergeräts (7) die Ansteuerung des Hilfsbremsaktuators (29) durchgeführt wird.

6. Verfahren nach einem der vorhergehenden Ansprüche, **dadurch gekennzeichnet, dass** bei der Hilfsbremsanlage (28) eine Betätigung der mindestens einen Bremseinrichtung (5, 6) durchgeführt wird, indem bei dem mindestens einen Hilfsbremsaktuator (29) je ein Fluidzylinder (30) druckentlastet wird, der mit einem in eine Betätigungsstellung vorgespannten Betätigungskolben ausgestattet ist.

7. Bremssteuergerät (7), welches dazu eingerichtet ist, bei einer Hilfsbremsanlage (28) eines Bremssystems (1) eines Nutzfahrzeuges eine Ansteuerung mindestens eines Hilfsbremsaktuators (29) zur Betätigung von mindestens einer Bremseinrichtung (5, 6) je eines Fahrzeugrades (2, 3) einzuleiten, wobei das Bremssteuergerät (7) ferner dazu ausgebildet ist, bei Erfassung eines zumindest teilweisen Ausfalls einer Betriebsbremsanlage (8) des Bremssystems (1) einen Notbetrieb einzuleiten, im Zuge des Notbetriebs mit Erfassung einer Betätigung mindestens einer Bremsbetätigungseinrichtung (21, 22) der Betriebsbremsanlage (8) über ein Getriebesteuergerät (25) auf den mindestens einen Hilfsbremsaktuator (29) zuzugreifen und dabei über den Hilfsbremsaktuator (29) eine an einem Grad einer Betätigung der mindestens einen Bremsbetätigungseinrichtung (21, 22) orientierte Betätigung der mindestens einen Bremseinrichtung (5, 6) einzuleiten.

8. Bremssystem (1) für ein Nutzfahrzeug, umfassend eine Betriebsbremsanlage (8), eine Hilfsbremsanlage (28), Bremseinrichtungen (5, 6) für Fahrzeugräder einer Fahrzeugachse (4) des Nutzfahrzeuges, wobei es sich bei der Fahrzeugachse (4) um eine Hinterachse des Nutzfahrzeugs handelt, und ein Bremssteuergerät (7), ein Fahrzeugsteuergerät (24) und ein Getriebesteuergerät (25), wobei die Betriebsbremsanlage (8) mindestens eine Bremsbetätigungseinrichtung (21, 22) aufweist, über welche bei Betätigung in einem Normalbetrieb je mindestens ein zugehöriger Betriebsbremsaktuator (9, 10) ansteuerbar ist, wobei der mindestens eine zugehörige Betriebsbremsaktuator (9, 10) bei Ansteuerung im Normalbetrieb eine der Betätigung der mindestens einen Bremsbetätigungseinrichtung (21, 22) entsprechende Betätigung der jeweils zugeordneten Bremseinrichtung (5, 6) vornimmt, **dadurch gekennzeichnet, dass** das Bremssteuergerät (7) in einem Datenübertragungssystem mit dem Getriebesteuergerät (25) verbunden ist, und die Hilfsbremsanlage (28) einen Hilfsbremsaktuator (29) aufweist, wobei der Hilfsbremsaktuator (29) und die Betriebsbremsaktuatoren (9, 10) auf dieselbe Bremseinrichtung (5, 6) wirken, wobei der Hilfsbremsaktuator (29) in einem Normalbetrieb über das Getriebesteuergerät (25) ansteuerbar ist und in einem Notbetrieb zum Abbremsen der Fahrzeugräder (2, 3) eine Betätigung des Hilfsbremsaktuators (29) von dem Bremssteuergerät (7) über das Getriebesteuergerät (25) einleitbar ist

9. Bremssystem (1) nach Anspruch 8, **dadurch gekennzeichnet, dass** der Hilfsbremsaktuator (29) einen Fluidzylinder (30) mit einem Betätigungskolben aufweist, der in eine Betätigungsstellung vorgespannt ist, wobei der Betätigungskolben durch Druckversorgung des Fluidzylinders (30) mit Fluid in eine Öffnungsstellung überführbar ist, in welcher die Betätigung der mindestens einen Bremseinrichtung (5, 6) über den Hilfsbremsaktuator (29) aufgehoben ist.

10. Bremssystem (1) nach einem der Ansprüche 8 oder 9, **dadurch gekennzeichnet, dass** bei der Betriebsbremsanlage (8) der mindestens eine zugehörige Betriebsbremsaktuator (9, 10) in je einem Bremskreis (11) angeordnet ist, in welchem im Normalbetrieb eine Steuerung des je zugehörigen Betriebsbremsaktuators (9, 10) in Abhängigkeit der Betätigung der mindestens einen Bremsbetätigungseinrichtung (21, 22) stattfindet.

11. Bremssystem (1) nach einem der Ansprüche 8 bis 10, **dadurch gekennzeichnet, dass** bei der Betriebsbremsanlage (8) in mindestens einem Bremskreis (11), in welchem die Betriebsbremsaktuatoren (9, 10) steuerbar sind, eine Sensorik vorgesehen ist, über welche ein Druck von Fluid des mindestens einen Bremskreises (11) überwachbar ist.

12. Nutzfahrzeug umfassend ein Bremssystem (1) nach einem der Ansprüche 8 bis 11.

## Claims

1. Method for operating a brake system (1) of a commercial vehicle, wherein the brake system (1) comprises a service brake system (8), a brake control unit (7), an auxiliary brake system (28) and brake devices (5, 6) for vehicle wheels (2, 3) of a vehicle axle (4) of the commercial vehicle, wherein the vehicle axle (4) is a rear axle of the commercial vehicle, wherein, in the case of the service brake system (8), at least one associated service brake actuator (9, 10) is actuated in normal operation when at least one brake actuating device (21, 22) is actuated, via which service brake actuator with actuation an actuation, corresponding to the actuation of the at least one brake actuating device (21, 22), of the respective associated brake device (5, 6) is carried out, wherein the auxiliary brake system (28) is provided in normal operation for the generation of a parking brake function, wherein, in the auxiliary brake system (28), an actuation of at least one of the brake devices (5, 6) can be initiated via at least one transmission control unit (25), and wherein emergency operation is carried out when an at least partial failure of the service brake system (8) is detected in the form of a failure of a pressure source (15) of the service brake system (8), leaks in the area of lines (12, 13) or a failure of one or both service brake actuators (9, 10), **characterized in that**, in the auxiliary brake system (28), the actuation of the at least one brake device (5, 6) is initiated via the transmission control unit (25) by actuating at least one auxiliary brake actuator (29), **in that**, in the course of emergency operation, the auxiliary brake actuator (29) is accessed by the brake control unit (7) with detection of the actuation of the at least one brake actuating device (21, 22), and **in that** an adjustment of an actuation of the at least one brake device (5, 6) oriented to a degree of the actuation of the at least one brake actuating device (21, 22) is carried out by the brake control unit (7) by means of the auxiliary brake actuator (29), wherein the auxiliary brake actuator (29) and the service brake actuators (9, 10) act on the same brake device (5, 6).

2. Method according to Claim 1, **characterized in that**, in the course of emergency operation, a required brake torque is determined based on the degree of the actuation of the at least one brake actuating device (21, 22), wherein the required brake torque is subsequently used for the setting of the actuation of the at least one auxiliary brake actuator (29).

3. Method according to Claim 1 or 2, **characterized in that**, as an at least partial failure, an at least too low pressure supply of the at least one associated service brake actuator (9, 10) via a pressure source (15) is detected, to which pressure source the at least one associated service brake actuator (9, 10) is connected when the actuation of the at least one brake actuating device (21, 22) is detected.

4. Method according to Claim 3, **characterized in that** the at least too low pressure supply in the service brake system (8) is detected via a pressure sensor (18).

5. Method according to one of the preceding claims, **characterized in that** the actuation of the at least one auxiliary brake actuator (29) is initiated via the brake control unit (7), to which end a data transmission is carried out in a data transmission system between the brake control unit (7) and the transmission control unit (25), wherein the actuation of the auxiliary brake actuator (29) is carried out via the transmission control unit (25) according to a specification of the first brake control unit (7).

6. Method according to one of the preceding claims, **characterized in that**, in the auxiliary brake system (28), an actuation of the at least one brake device (5, 6) is carried out by, in the case of the at least one auxiliary brake actuator (29), a fluid cylinder (30) in each case being depressurized, which is equipped with an actuating piston preloaded into an actuating position.

7. Brake control unit (7) which is designed to initiate, in an auxiliary brake system (28) of a brake system (1) of a commercial vehicle, an actuation of at least one auxiliary brake actuator (29) for the actuation of at least one brake device (5, 6) of in each case one vehicle wheel (2, 3), wherein the brake control unit (7) is further designed to initiate emergency operation when an at least partial failure of a service brake system (8) of the brake system (1) is detected, to access the at least one auxiliary brake actuator (29) in the course of emergency operation upon detection of an actuation of at least one brake actuating device (21, 22) of the service brake system (8) via a transmission control unit (25), and in the process to initiate an actuation of the at least one brake device (5, 6) oriented to a degree of an actuation of the at least one brake actuating device (21, 22) via the auxiliary brake actuator (29).

8. Brake system (1) for a commercial vehicle, comprising a service brake system (8), an auxiliary brake system (28), brake devices (5, 6) for vehicle wheels of a vehicle axle (4) of the commercial vehicle, wherein the vehicle axle (4) is a rear axle of the commercial vehicle, and a brake control unit (7), a vehicle control unit (24) and a transmission control unit (25), wherein the service brake system (8) has at least one brake actuating device (21, 22), via which in each case at least one associated service brake actuator (9, 10) can be actuated upon actuation in normal operation, wherein the at least one associated service brake actuator (9, 10), upon actuation in normal operation, performs an actuation of the respective associated brake device (5, 6) which corresponds to the actuation of the at least one brake actuating device (21, 22), **characterized in that** the brake control unit (7) is connected in a data transmission system to the transmission control unit (25), and the auxiliary brake system (28) has an auxiliary brake actuator (29), wherein the auxiliary brake actuator (29) and the service brake actuators (9, 10) act on the same brake device (5, 6), wherein the auxiliary brake actuator (29) can be actuated in normal operation via the transmission control unit (25) and, in emergency operation, an actuation of the auxiliary brake actuator (29) can be initiated by the brake control unit (7) via the transmission control unit (25) in order to brake the vehicle wheels (2, 3).

9. Brake system (1) according to Claim 8, **characterized in that** the auxiliary brake actuator (29) has a fluid cylinder (30) with an actuating piston which is preloaded into an actuating position, wherein the actuating piston can be transferred into an open position by the pressurized supply of the fluid cylinder (30) with fluid, in which open position the actuation of the at least one brake device (5, 6) via the auxiliary brake actuator (29) is cancelled.

10. Brake system (1) according to one of Claims 8 and 9, **characterized in that**, in the service brake system (8), the at least one associated service brake actuator (9, 10) is arranged in in each case one brake circuit (11), in which, in normal operation, control of the in each case corresponding service brake actuator (9, 10) takes place in a manner dependent on the actuation of the at least one brake actuating device (21, 22).

11. Brake system (1) according to one of Claims 8 to 10, **characterized in that**, in the service brake system (8), a sensor system is provided in at least one brake circuit (11), in which the service brake actuators (9, 10) are controllable, via which sensor system a pressure of fluid of the at least one brake circuit (11) can be monitored.

12. Commercial vehicle comprising a brake system (1) according to one of Claims 8 to 11.

## Revendications

1. Procédé d'exploitation d'un système de freinage (1) d'un véhicule utilitaire, le système de freinage (1) présentant une installation de freinage de service (8), un appareil de commande de frein (7), une installation de freinage auxiliaire (28) et des dispositifs de freinage (5, 6) pour des roues de véhicule (2, 3) d'un essieu de véhicule (4) du véhicule utilitaire, l'essieu de véhicule (4) consistant en un essieu arrière du véhicule utilitaire ; dans l'installation de freinage de service (8), dans un mode de fonctionnement normal, lors de l'actionnement d'au moins un dispositif d'actionnement de frein (21, 22), au moins un actionneur de frein de service (9, 10) associé étant commandé, par l'intermédiaire duquel, avec commande, un actionnement du dispositif de freinage (5, 6) respectivement associé correspondant à l'actionnement de l'au moins un dispositif d'actionnement de frein (21, 22) étant effectué, l'installation de freinage auxiliaire (28) étant prévue dans le mode de fonctionnement normal pour représenter une fonction de frein de stationnement ; dans l'installation de freinage auxiliaire (28), un actionnement d'au moins l'un des dispositifs de freinage (5, 6) pouvant être déclenché par l'intermédiaire d'au moins un appareil de commande de transmission (25) et, en cas de détection d'une défaillance au moins partielle de l'installation de freinage de service (8) sous la forme d'une défaillance d'une source de pression (15) de l'installation de freinage de service (8), de fuites dans la zone de conduites (12, 13) ou d'une défaillance d'un ou des deux actionneurs de frein de service (9, 10), un mode de fonctionnement de secours étant exécuté, **caractérisé en ce que**, dans l'installation de freinage auxiliaire (28), l'actionnement de l'au moins un dispositif de freinage (5, 6) est déclenché par l'intermédiaire de l'appareil de commande de transmission (25) par commande d'au moins un actionneur de frein auxiliaire (29), **en ce qu'**au cours du mode de fonctionnement de secours, on accède à l'actionneur de frein auxiliaire (29) par l'appareil de commande de frein (7) avec la détection de l'actionnement de l'au moins un dispositif d'actionnement de frein (21, 22), et **en ce que** l'appareil de commande de frein (7) effectue alors, au moyen de l'actionneur de frein auxiliaire (29), un réglage d'un actionnement de l'au moins un dispositif de freinage (5, 6) orienté sur un degré d'actionnement de l'au moins un dispositif d'actionnement de frein (21, 22), l'actionneur de freinage auxiliaire (29) et les actionneurs de freinage de service (9, 10) agissant sur le même dispositif de freinage (5, 6).

2. Procédé selon la revendication 1, **caractérisé en ce qu'**au cours du mode de fonctionnement de secours, un couple de freinage requis est déterminé sur la base du degré d'actionnement de l'au moins un dispositif d'actionnement de frein (21, 22), le couple de freinage requis étant ensuite utilisé pour régler la commande de l'au moins un actionneur de frein auxiliaire (29).

3. Procédé selon la revendication 1 ou 2, **caractérisé en ce que** l'on détecte comme défaillance au moins partielle une alimentation en pression au moins trop faible de l'au moins un actionneur de frein de service associé (9, 10) par l'intermédiaire d'une source de pression (15) à laquelle l'au moins un actionneur de frein de service associé (9, 10) est relié lors de la détection de l'actionnement de l'au moins un dispositif d'actionnement de frein (21, 22).

4. Procédé selon la revendication 3, **caractérisé en ce que** l'alimentation en pression au moins trop faible dans l'installation de freinage de service (8) est détectée par l'intermédiaire d'un capteur de pression (18).

5. Procédé selon l'une quelconque des revendications précédentes, **caractérisé en ce que** la commande de l'au moins un actionneur de frein auxiliaire (29) est déclenchée par l'intermédiaire de l'appareil de commande de frein (7), un transfert de données étant effectué à cet effet entre l'appareil de commande de frein (7) et l'appareil de commande de transmission (25) dans un système de transfert de données, la commande de l'actionneur de frein auxiliaire (29) étant alors exécutée par l'intermédiaire de l'appareil de commande de transmission (25) conformément à une prescription du premier appareil de commande de frein (7).

6. Procédé selon l'une quelconque des revendications précédentes, **caractérisé en ce que**, dans le système de freinage auxiliaire (28), un actionnement de l'au moins un dispositif de freinage (5, 6) est exécuté en décomprimant, dans l'au moins un actionneur de frein auxiliaire (29), respectivement un cylindre de fluide (30) qui est équipé d'un piston d'actionnement précontraint dans une position d'actionnement.

7. Appareil de commande de frein (7), qui est adapté pour déclencher, dans une installation de freinage auxiliaire (28) d'un système de freinage (1) d'un véhicule utilitaire, une commande d'au moins un actionneur de frein auxiliaire (29) pour l'actionnement d'au moins un dispositif de freinage (5, 6) de chaque roue de véhicule (2, 3), l'appareil de commande de frein (7) étant en outre réalisé pour déclencher un mode de fonctionnement de secours lors de la détection d'une défaillance au moins partielle d'une installation de freinage de service (8) du système de freinage (1) ; au cours du mode de fonctionnement de secours, avec la détection d'un actionnement d'au moins un dispositif d'actionnement de frein (21, 22) de l'installation de freinage de service (8), pour accéder, par l'intermédiaire d'un appareil de commande de transmission (25), à l'au moins un actionneur de frein auxiliaire (29) et pour déclencher alors, par l'intermédiaire de l'actionneur de frein auxiliaire (29), un actionnement de l'au moins un dispositif de freinage (5, 6) orienté sur un degré d'un actionnement de l'au moins un dispositif d'actionnement de frein (21, 22).

8. Système de freinage (1) pour un véhicule utilitaire, comprenant une installation de freinage de service (8), une installation de freinage auxiliaire (28), des dispositifs de freinage (5, 6) pour des roues de véhicule d'un essieu de véhicule (4) du véhicule utilitaire, l'essieu de véhicule (4) consistant en un essieu arrière du véhicule utilitaire, et un appareil de commande de frein (7), un appareil de commande de véhicule (24) et un appareil de commande de transmission (25), l'installation de freinage de service (8) présentant au moins un dispositif d'actionnement de frein (21, 22) par l'intermédiaire duquel, lors d'un actionnement dans un mode de fonctionnement normal, au moins un actionneur de frein de service (9, 10) associé peut être commandé, l'au moins un actionneur de frein de service (9, 10) associé, lors d'une commande dans le mode de fonctionnement normal, effectuant un actionnement du dispositif de freinage (5, 6) respectivement associé correspondant à l'actionnement de l'au moins un dispositif d'actionnement de frein (21, 22), **caractérisé en ce que** l'appareil de commande de frein (7) est relié dans un système de transfert de données à l'appareil de commande de transmission (25), et l'installation de freinage auxiliaire (28) présente un actionneur de frein auxiliaire (29), l'actionneur de frein auxiliaire (29) et les actionneurs de frein de service (9, 10) agissant sur le même dispositif de freinage (5, 6), l'actionneur de frein auxiliaire (29) pouvant être commandé par l'intermédiaire de l'appareil de commande de transmission (25) dans un mode de fonctionnement normal et un actionnement de l'actionneur de frein auxiliaire (29) pouvant être déclenché par l'appareil de commande de frein (7) par l'intermédiaire de l'appareil de commande de transmission (25) dans un mode de fonctionnement de secours pour freiner les roues de véhicule (2, 3)

9. Système de freinage (1) selon la revendication 8, **caractérisé en ce que** l'actionneur de frein auxiliaire (29) comprend un cylindre de fluide (30) avec un piston d'actionnement qui est précontraint dans une position d'actionnement, le piston d'actionnement pouvant être transféré par alimentation en pression du cylindre de fluide (30) avec du fluide dans une position d'ouverture dans laquelle l'actionnement de l'au moins un dispositif de freinage (5, 6) par l'intermédiaire de l'actionneur de frein auxiliaire (29) est supprimé.

10. Système de freinage (1) selon l'une quelconque des revendications 8 ou 9, **caractérisé en ce que**, dans le système de freinage de service (8), l'au moins un actionneur de frein de service associé (9, 10) est agencé dans un circuit de freinage respectif (11), dans lequel, dans le mode de fonctionnement normal, une commande de l'actionneur de frein de service respectif associé (9, 10) a lieu en fonction de l'actionnement de l'au moins un dispositif d'actionnement de frein (21, 22).

11. Système de freinage (1) selon l'une quelconque des revendications 8 à 10, **caractérisé en ce que**, dans l'installation de freinage de service (8), dans au moins un circuit de freinage (11) dans lequel les actionneurs de frein de service (9, 10) peuvent être commandés, il est prévu un système de capteurs par l'intermédiaire duquel une pression de fluide de l'au moins un circuit de freinage (11) peut être surveillée.

12. Véhicule utilitaire comprenant un système de freinage (1) selon l'une quelconque des revendications 8 à 11.
